# EUROPEAN PATENT SPECIFICATION

(11) **EP 4 140 279 B1**
(45) Date of publication and mention of the grant of the patent: **02.04.2025**
(21) Application number: 22185943.2
(22) Date of filing: 20.07.2022
(51) Int. Cl.: A01D 34/82, A01D 34/67

(54) **FASTENING ELEMENT FOR COUPLING THE HANDLEBAR OF A DEVICE FOR THE MAINTENANCE OF TERRAINS**
BEFESTIGUNGSELEMENT ZUM ANKUPPELN DES LENKERS EINER VORRICHTUNG ZUR GELÄNDEPFLEGE
ELÉMENT DE FIXATION POUR L'ACCOUPLEMENT DU GUIDON D'UN DISPOSITIF D'ENTRETIEN DES TERRAINS

(30) Priority: 31.08.2021 IT 202100022631
(43) Date of publication of application: 01.03.2023
(60) Divisional application: 23165728.9
(73) Proprietor: Stiga S.p.A. in breve anche St. S.p.A., 31033 Castelfranco Veneto (TV) (IT)
(72) Inventor: D'AGOSTINI, Mauro, San Martino di Lupari (PD) (IT); MARTONE, Dario, Padova (IT); BACCHIN, Gian Luca, Castelfranco Veneto (TV) (IT); NIRO, Adriano, Treviso (IT); CAMERON, James, Treviso (IT)
(74) Representative: PGA S.p.A.

(56) References cited:
- US-A- 2 965 386
- US-A1- 2005 188 664
- US-A1- 2014 260 157

## Description

### FIELD OF THE INVENTION

The present invention relates to a fastening element and to a mobile device for the maintenance of land, for example gardens, turfgrasses or agricultural land, comprising the fastening element. In particular, the mobile device can be a lawnmower having a work unit constrained to a handle by means of a fastening element, for example a bracket.

### BACKGROUND ART

The use of mobile devices is known in the field of land maintenance, in particular gardening, such as lawnmowers, soil tillers, soil aerators, etc., having a work unit manually moved or directed by a handle constrained to the work unit by means of a bracket. In particular, the engagement between the handle and the work unit occurs by inserting bolts carried by the handle, inside the respective holes defined on the bracket, the latter carried by the work unit itself.

Although the solution described above allows to effectively constrain a work unit to a handle, the Applicant has found that such a solution highlights limitations and drawbacks. In particular, the coupling by means of a perforated bracket cannot be performed by a single user independently, thus making the coupling process complex and impractical.

The state of the art comprises in particular technical solutions of a lawnmower device in which the handlebar is constrained to the frame by means of an element comprising a pair of grooves, which are however not used for fastening the handlebar, but exclusively for adjusting the inclination.

Document US2,965,386 relates to a lawnmower device comprising a structure for mounting the handlebar to the frame. The mounting structure comprises an arm integral with the frame to which the handlebar is rotatably constrained. On the upper wall of the arm there are two notches to which two protrusions are selectively engaged, forming part of a plate associated with the handlebar.

Document US2014/0260157A1 relates to a lawnmower comprising means for adjusting the inclination of the handle with respect to the frame. A plurality of notches are obtained on an arcuate element integral with the frame, so as to selectively house a dentil integral with the handlebar. The inclination of the handlebar therefore varies depending on the notch in which the dentil is inserted.

Document US2005/0188664A1 relates to a lawnmower device comprising a system which allows a fastening of the handlebar which is releasable by means of a manually operated lever.

### OBJECT OF THE INVENTION

Therefore, the object of the present invention is to solve at least one of the drawbacks and/or limitations of the previous solutions.

A first object of the present invention is to provide a mobile device comprising a fastening element capable of facilitating and minimizing the mounting times of the mobile device.

A further object of the invention is to offer a solution for fastening the handle to the work unit of a mobile device for the maintenance of land such as gardens which ensures a stable and efficient engagement between the parts.

The object of the present invention is also to provide a mobile device comprising a fastening element having a simple and compact structure, achievable by known industrial processes and with low implementation costs.

These and other objects, which will appear more clearly from the following description, are substantially achieved by a fastening element and by a mobile device comprising the fastening element in accordance with one or more of the appended claims.

### BRIEF DESCRIPTION OF THE DRAWINGS

Some embodiments and aspects of the invention will be described hereinafter with reference to the accompanying drawings, given merely for illustrative, non-limiting purposes in which:
- Figures 1 and 3 show perspective views of a mobile device in accordance with a first embodiment of the present invention;
- figure 2 is a detailed view of a second embodiment of the mobile device in accordance with the present invention;
- figure 4 is a detailed view of the mobile device of figure 3;
- figures 5 and 6 are perspective views of a fastening element of the mobile device in accordance with the present invention;
- figure 7 is a perspective view of a drive handle of the mobile device in accordance with the present invention;
- figure 8 is a detailed view of the drive handle of figure 7;
- finally figure 9 shows a third embodiment related to the handle-drive fastening of the mobile device work unit in accordance with the present invention.

### DEFINITIONS AND CONVENTIONS

It should be noted that in the present detailed description, corresponding parts illustrated in the various figures are indicated with the same numerical references. The figures could illustrate the object of the invention through non--scale depictions; therefore, the parts and components illustrated in the figures related to the object of the invention could exclusively relate to schematic depictions.

### DETAILED DESCRIPTION

### Mobile device 1

A mobile device 1 configured to perform maintenance operations, for example cutting turfgrasses, within a work area of a land, for example a turfgrass, a garden or an agricultural land, has been indicated as a whole with 1.

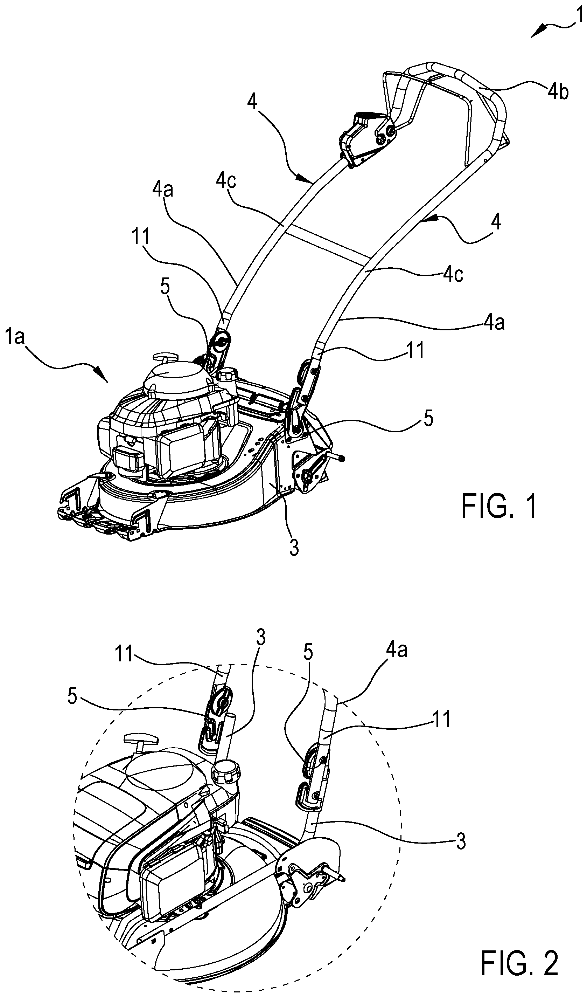

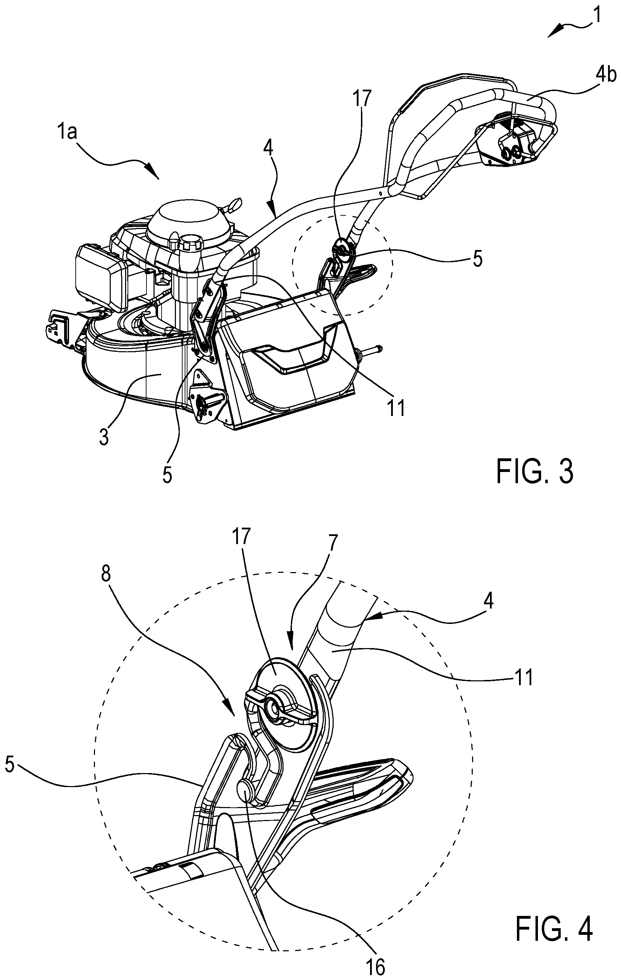

The mobile device depicted in figures 1 and 3 can be a user-driven device or a user-driven and pushed device. In particular, the mobile device 1 can comprise a work unit 1a provided with movement means 2, for example one or more wheels, or one or more rollers, or one or more motorized tracks or still other members, adapted to determine the advancement of the mobile device (for example, the work unit 1a can comprise one or more motors for the operation of the movement means and of the work tool(s)), or the mobile device can for example comprise wheels or rollers or idle tracks moved as a result of the thrust exerted by the user.

The mobile device 1 and in particular the work unit 1a further comprises a support frame 3 carrying the movement means 2, and one or more work tools (such as blades, tools for trimming the land or other tools which are motorized or not motorized and known per se and therefore not illustrated) configured to perform the maintenance operations within the work area.

Furthermore, the mobile device 1 can comprise a drive handle 4 constrained to the frame 3 of the work unit 1a and configured to allow an operator to move and/or direct the mobile device within the work area. The drive handle 4 extends behind the frame along an inclined direction transverse to the frame 3, between a first end 4a constrainable to the frame and a second end 4b configured to allow gripping by an operator. The drive handle 4 can be made of metal material, for example steel, iron or aluminium, or plastic or composite material.

As shown in the accompanying figures, the drive handle 4 is constrained to the frame 3 by means of a fastening element 5 interposed between the frame 3 and the same drive handle 4. In particular, the coupling between the drive handle 4 and the frame 3 is obtained as a result of the engagement between the fastening element 5 and a coupling portion 11 of the handle 4.

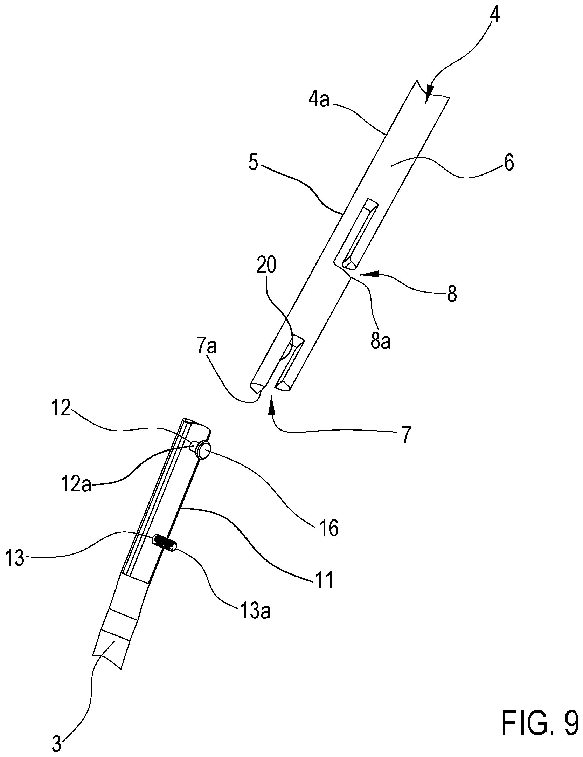

It should be noted that in the accompanying figures, a fastening element 5 carried by the frame 3 and a coupling portion 11 carried by the drive handle 4 have been shown. However, an embodiment of the invention in which the fastening element 5 is carried by the drive handle 4 is not excluded, while the coupling portion 11 is carried by the frame 3 (see figure 9 in this regard).

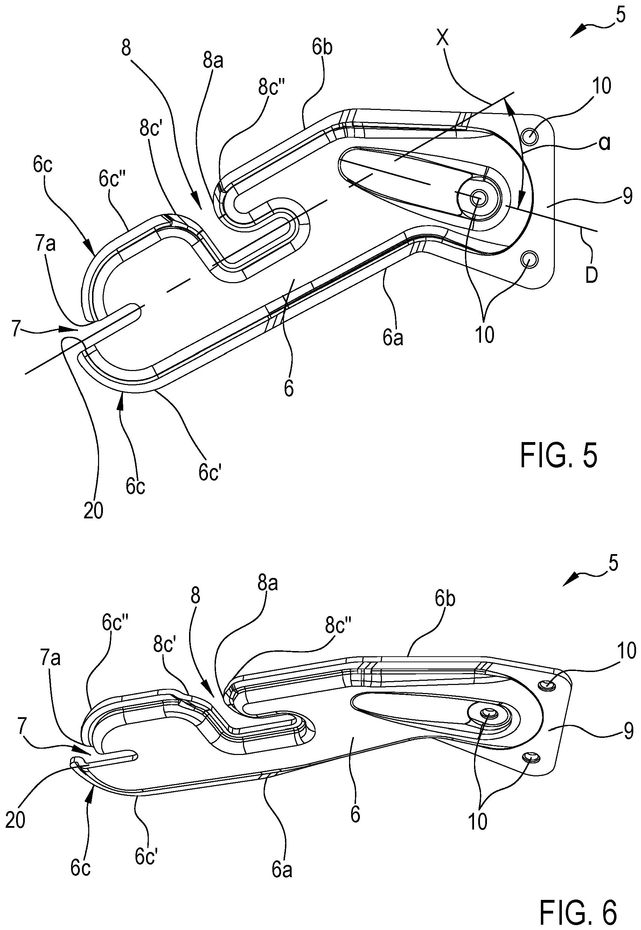

The fastening element 5 comprises at least one main body 6 having, for example, an elongated shape. The body 6 is laterally delimited by at least a first and a second side 6a, 6b opposite each other. The main body 6 further comprises a head portion 6c, which delimits one end of the main body itself and connects the first and the second side 6a, 6b. For example, the head portion 6c can have a curvilinear shape, which connects respective ends of the first and the second side 6a, 6b. In particular, the head portion 6c has a first and a second lead-in stretch 6c', 6c" separated from each other by a first groove 7 penetrating in the body 6 and detailed hereinafter. In particular, as for example shown in figures 5 and 6 , the first lead-in stretch 6c' is interposed between the first side 6a and the first groove 7, while the second lead-in stretch 6c" is interposed between the second side 6b and the same first groove. It should be noted how the first and the second stretch 6c', 6c" are offset along a straight trajectory X of the first groove 7. In fact, the first lead-in stretch 6c' protrudes externally with respect to the second lead-in stretch 6c", in the direction of the trajectory X, to define a support lip 20 configured to guide an element associated with the coupling portion in insertion inside the first groove 7, as will be further explained below.

As previously mentioned, the first groove 7 extends from an inner zone of the main body 6 to a peripheral area of the main body 6 itself where a first opening 7a for access to the first groove 7 is defined; in other words, the first groove is delimited by an open peripheral profile. In particular, the first opening 7a of the first groove 7 faces at the head portion 6c of the main body 6, spacing the first and second lead-in stretches 6c', 6c" from each other. As for example shown in figure 5 , the first groove 7 is substantially defined in the peripheral area of the main body 6 at the head portion 6c, and extends from the first opening 7a for at least a first straight stretch along the trajectory X. In the examples illustrated the first groove 7 is in fact entirely straight from the first opening to a bottom of the groove 7 itself.

The fastening element 5 further comprises a second groove 8, which cooperates with the first groove 7, to removably engage the coupling portion 11 of the handle 4 with the frame 3, obtaining a constraint condition of the same fastening element 5. The second groove 8 is distinct and spaced from the first groove 7, and extends from an inner area of the main body 6 towards the peripheral area of the same main body where a second opening 8a is defined for access to the second groove 8. The second groove 8 is defined by an open peripheral profile defined on the main body 6. As can be seen for example from figure 5, the second opening 8a of the second groove 8 is spaced from the first opening 7a of the first groove 7: the first and the second groove 7, 8 are thus completely distinct and spaced from each other. In other words, the second opening 8a of the second groove 8 faces at the first or second side 6a, 6b of the main body, at a predetermined distance from the first opening 7a. Under the geometric profile, the second groove extends along a first and a second stretch which are transverse to each other. According to the invention, the first stretch extends from the second opening 8a transversely to the trajectory X of the first groove 7, while the second stretch extends in continuation of the first stretch, along a direction parallel to, or coinciding with, the trajectory X of the first groove 7: in the example shown, the second groove 8 has a substantially "L" shape and the second stretch of the second groove is straight and of equal extension to the extension of the first groove.

Under the structural profile, the fastening element 5 can be a bracket, for example plate-shaped, engaged (for example welded or fastened by screws or other) to the frame and for example made of metallic or plastic material.

Figures 1 to 4 show the mobile device in use conditions, in which the drive handle 4 is constrained to the frame 3 by means of the fastening element 5. **In** this condition, the second groove 8 faces away from the land, so that the engagement of the coupling portion 11 of the handle 4 with the groove 8 of the fastening element 5 is facilitated by the action of the force of gravity.

According to a first embodiment, for example shown in figures 5 and 6, the fastening element 5 comprises a constraining portion 9, extending from the main body 6 along an extension direction D which is inclined with respect to the trajectory X by an internal angle α between 50° and 70°. The constraining portion 9 in turn has a plurality of holes 10, not aligned with each other (for example three holes arranged in a triangle), each of which is configured to allow the insertion of a bolt or a screw adapted to constrain the fastening element 5 to the frame 3.

In accordance with a second embodiment of the invention shown in figure 2, the constraining portion 9 emerges, for example laterally, from the main body 6 starting from the first or the second side 6a, 6b and is configured to engage, for example by interference, a tubular sleeve carried by the frame 3. In fact, according to the latter embodiment, the constraining portion 9 is free of holes 10 and has a cylindrical or tubular shape adapted to receive in insertion the sleeve (or adapted to insert into the sleeve) carried by the frame 3.

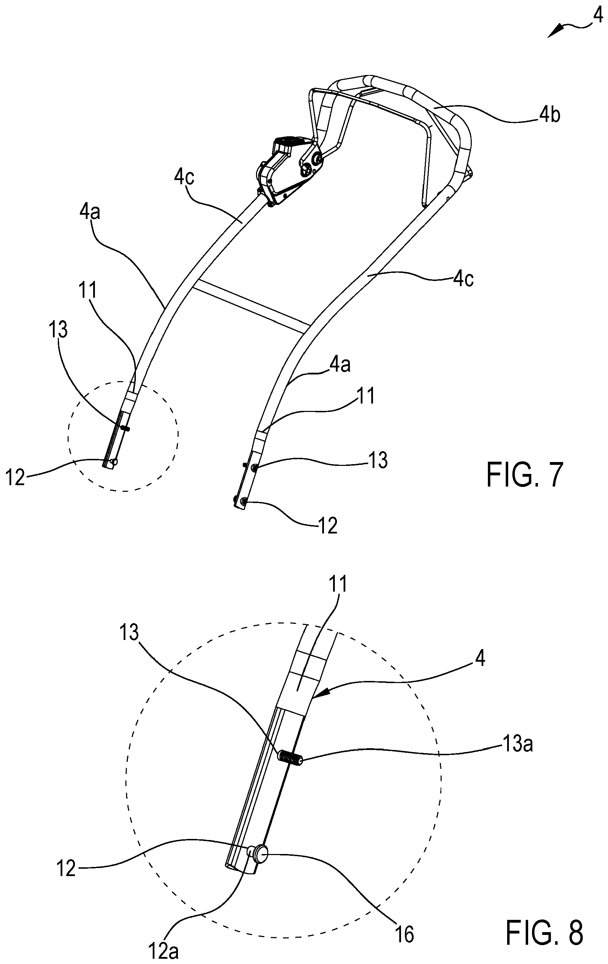

As previously mentioned, the drive handle 4 of the mobile device 1 comprises the coupling portion 11, which is engageable to the fastening element 5 at least between a constraint condition (which ensures the stable engagement of the two parts 5 and 11 thus allowing the locking of the drive handle 4 with respect to the frame 3) and a release condition (which allows the disengagement of the handle 4 from the frame 3). In particular, in the constraint condition, the fastening element 5 is engaged to the coupling portion 11, while in the release condition, the fastening element 5 is disengaged from the coupling portion 11. As shown in figures 7 and 8, the coupling portion 11 has an elongated body, for example of tubular shape, extending along a predetermined extension direction, on which at least a first and a second locking pin 12, 13 are engaged, respectively configured to insert inside the second groove 8 and the first groove 7. In particular, the first and the second locking pin 12, 13 are aligned with each other and, in the illustrated example, are in particular along the extension direction of the elongated body of the coupling portion 11, so as to be able to be positioned inside the first groove 7 and the second stretch of the second groove 8.

The first and the second locking pin 12, 13 have a respective stretch 12a, 13a (figure 8) emerging transversely with respect to the elongated body of the coupling portion 11: each stretch 12a, 13a is respectively configured to insert inside the first and the second groove 7, 8. Even more in detail, the stretch 12a of the first locking pin 12 terminally carries a body or terminal expansion 16, having a radial dimension greater than the radial dimension of the stretch 12a and configured to prevent the extraction of the first locking pin 12 from the second groove along a direction parallel to the axis of the first pin 12. In other words, by virtue of the body or expansion 16, the first locking pin 12 can be inserted into the second groove 8 or removed from the second groove 8 only through the second access opening 8a since the stretch 12a has a radial dimension such as to slide in the second groove, while the body or expansion 16 has a minimum radial dimension greater than the maximum width of the second groove. The stretch 12a of the first locking pin 12, in the constraint condition of the fastening element 5, is thus inserted inside the second groove, while the body or expansion 16 remains outside the second groove acting in abutment on one of the opposite side surfaces of the main body.

With regard to the second locking pin 13, it has a respective stretch 13a of radial dimensions such as to insert and slide into the first groove (in practice, the second pin has a maximum radial dimension smaller than the width of the second groove). The coupling portion 11 further comprises a locking knob 17 configured to engage a threaded portion made on the stretch 13a of the second locking pin 13 and configured to constrain the coupling portion 11 to the fastening element 5. The stretch 13a of the second locking pin 13, in the constraint condition of the fastening element 5, is thus engaged within the first groove 7, while the main body of the coupling portion 11 and the locking knob 17 act in abutment on surfaces of the main body 6 opposite each other. In other words, the locking knob 17 is configured to permanently constrain the second locking pin 13 to the first groove, preventing any clearance between the coupling portion 11 and the main body 6 of the fastening element or plate 5.

It should further be noted that the device can comprise a plurality of coupling portions 11 and respective fastening elements 5 identical to what is described above; for example, in the illustrated embodiments, the drive handle 4 comprises a horizontal manoeuvring stretch at the second end 4b of the handle itself on which the user can act when he must push and/or direct the mobile device 1; the handle 4 comprises two distinct arms 4c extending, for example parallel or mirrored with each other, from the second end 4b towards the work unit 1a and each terminating in a respective coupling portion 11. In this case each coupling portion 11 of each arm 4c engages a respective fastening element 5 (in the case illustrated in the drawings there are therefore two fastening elements 5, one for each of the arms 4c of the handle 4) each of which is carried by the frame 3.

### Mounting procedure

A further object of the present invention is a procedure for mounting the mobile device in accordance with the description above and/or in accordance with any of the attached claims.

The procedure comprises the steps of constraining the drive handle 4 to the frame 3 using the first and the second groove 7, 8 present on each of the fastening elements (or on the fastening element in the event of a handle 4 with only one arm 4c).

In particular, the procedure includes constraining the coupling portion 11 of each arm 4c to the or to a respective fastening element 5.

In detail, for each arm 4c, the constraining step comprises the sub-steps of:
- inserting the first locking pin 12 inside the first stretch of the second groove 8,
- arranging the second locking pin 13 at the first opening 7a of the first groove 7,
- inserting the first locking pin 12 inside the second portion of the second groove 8 and simultaneously inserting the second locking pin 13 inside the first groove 7.

In particular, the step of arranging the second locking pin at the first opening includes resting such a second pin on the lip 20, thereby discharging the weight of the handle 4 on the frame 3 and thus on the ground.

Finally, the procedure includes, following the step of inserting the second locking pin 13 inside the first groove 7, and after bringing both the first and the second pin at a bottom of the respective grooves, an engagement step between the threaded portion of the second locking pin 13 and the knob 17.

Modifications and variations to the described device and procedure can be included, within the scope of protection of one or more of the appended claims.

For example, figure 9 shows an example in which the fastening element 5, comprising the first and the second groove 7 and 8 as described above, is carried by the drive handle 4, while the coupling portion 11 is carried by the frame 3 (see figure 9 in this regard). In this case, it should be noted how the second access opening, during mounting, is facing downwards and how the lip 20 is positioned so as to facilitate the mounting operations and the discharge of the weight of the handle 4 on the frame 3 and thus on the ground.

## Claims

1. Fastening element (5) configured to be installed in a mobile device for the maintenance of land, in particular turfgrasses or gardens or agricultural land, said fastening element (5) comprising:
- at least one main body (6),
- at least a first groove (7) extending from an inner area of the main body (6) to a peripheral area of the main body (6) itself where a first opening (7a) for access to the first groove (7) is defined,
- at least a second groove (8) distinct and spaced from the first groove (7), said second groove (8) extending from the inner area of the main body (6) towards the peripheral area of the main body (6) itself where a second opening (8a) for access to the second groove (8) is defined,
wherein the first groove (7) extends from the first opening (7a) for at least a first stretch, along a straight trajectory (X),
**characterised in that** the second groove (8) has:
- at least a first stretch extending from the second opening (8a), transversely to the trajectory (X) of the first groove (7),
- at least a second stretch extending in continuation of the first stretch, along a direction parallel to, or coinciding with, the trajectory (X).

2. Fastening element (5) according to claim 1, wherein the first and the second side (6a, 6b) of the main body (6) are straight and parallel to the trajectory (X).

3. Fastening element (5) according to claim 1 or claim 2, wherein the fastening element (5) comprises at least one constraining portion (9) extending from the main body (6) and extending along an extension direction (D) which is inclined with respect to the trajectory (X).

4. Fastening element (5) according to claim 3, wherein the extension direction (D) is inclined with respect to the trajectory (X) by an internal angle between 50° and 70°.

5. Fastening element (5) according to any one of claims 1 to 4, wherein the main body (6) has:
- at least a first and a second side (6a, 6b) opposite each other,
- a head portion (6c) connecting the first and the second side (6a, 6b),
wherein the first opening (7a) of the first groove (7) faces the head portion (6c) of the main body (6) and wherein the second opening (8a) of the second groove (8) faces at the first or the second side (6a, 6b) of the main body (6), at a predetermined distance from the first opening (7a).

6. Fastening element (5) according to claim 5, wherein the first opening (7a) is delimited by a respective first and second lead-in stretch (6c', 6c") and wherein the second opening (8a) is delimited by a respective first and second lead-in stretch (8c', 8c").

7. Fastening element (5) according to claim 6, wherein the first and second lead-in stretches (6c', 6c") delimiting the first opening (7a) are arcuate and/or wherein the first and second lead-in stretch (8c', 8c"), delimiting the second opening (8a) are arcuate.

8. Fastening element (5) according to claim 6 or to claim 7, wherein the first opening (7a) of the first groove (7) divides the peripheral area of the head portion (6c) of the main body (6) into:
- said first lead-in stretch (6c'), which is interposed between the first side (6a) and the first opening (7a) of the first groove (7),
- said second lead-in stretch (6c"), which is interposed between the second side (6b) and the first opening (7a) of the first groove (7).

9. Fastening element (5) according to claim 8, wherein the first lead-in stretch (6c') protrudes externally, parallel to said extension trajectory (X), with respect to the second lead-in stretch (6c") to define asupport lip (20).

10. Mobile device for the maintenance of land, in particular turfgrasses or gardens or agricultural land, comprising:
- movement means (2) configured to allow a movement of the mobile device within a work area,
- a frame (3) comprising at least one work tool configured to perform maintenance operations on the work area,
- a drive handle (4) configured to allow an operator to drive said mobile device within the work area and
- at least one fastening element (5) interposed, at least in a constraint condition, between the drive handle (4) and the frame (3), said fastening element (5) being according to any one of the preceding claims.

11. Mobile device according to the preceding claim, comprising at least one coupling portion (11) carried by the drive handle (4) or by the frame (3), said coupling portion (11) being removably engageable to the fastening element (5) of the mobile device (1), at least between:
- the constraint condition in which the fastening element (5) is engaged to the coupling portion (11),
- a release condition in which the fastening element (5) is disengaged from the coupling portion (11).

12. Mobile device according to the preceding claim, wherein, in the release condition, the fastening element (5) is carried by the frame (3), while the coupling portion (11) is carried by the drive handle (4).

13. Mobile device according to claim 11 or claim 12, wherein the coupling portion (11) has at least a first and a second locking pin (12, 13) respectively configured to insert inside the second groove (8) and the first groove (7).

14. Mobile device according to the preceding claim, wherein the coupling portion (11) has an elongated body extending along a predetermined extension direction, wherein the first and the second locking pin are aligned along said extension direction; and
wherein the first and the second locking pin (12, 13) have a respective stretch (12a, 13a) emerging transversely with respect to the elongated body of the coupling portion (11), each of said stretches (12a, 13a) being respectively engageable within the first and the second groove (7, 8).

15. Mobile device according to claim 13 or to claim 14, wherein:
i) when using the mobile device, the first side (6a) of the main body (6) faces the land to be maintained, and wherein the second side (6b) faces away with respect to the land, and/or
ii) the first locking pin (12) carries a terminal body (16) extending transversely to the stretch (12a) of the first locking pin (12), said terminal body (16) being configured, in the constraint condition of the fastening element (5) in which the first locking pin (12) is inserted in the second groove (8), to prevent the extraction of the first locking pin (12) from the second groove (8) along a direction parallel to the locking pin itself and thus allowing the extraction of the first locking pin (12) from the second groove (8) only through the second access opening (8a) and/or
iii) the second locking pin (13) has at least one threaded portion, and wherein the mobile device (1) comprises at least one locking knob (17) configured to engage the threaded portion of the second locking pin (13) and to constrain the coupling portion (11) to the fastening element (5) and/or
iv) the device comprises:
- a plurality of coupling portions (11) respectively carried by distinct ends of the drive handle (4),
- a plurality of fastening elements (5) carried by the frame (3) and respectively configured for engaging respective coupling portions (11) carried by the drive handle (4).

## Patentansprüche

1. Befestigungselement (5), das für die Installation in einem Mobilgerät zur Pflege von Land, insbesondere von Rasen oder Gärten oder landwirtschaftlichen Flächen, konfiguriert ist,
wobei das Befestigungselement (5) Folgendes umfasst:
- mindestens einen Hauptkörper (6),
- mindestens eine erste Nut (7), die sich von einem Innenbereich des Hauptkörpers (6) zu einem Randbereich des Hauptkörpers (6) selbst erstreckt, wo eine erste Öffnung (7a) für den Zugang zu der ersten Nut (7) definiert ist,
- mindestens eine zweite Nut (8), die von der ersten Nut (7) getrennt und beabstandet ist, wobei sich die zweite Nut (8) von dem Innenbereich des Hauptkörpers (6) zu dem Randbereich des Hauptkörpers (6) selbst erstreckt, wo eine zweite Öffnung (8a) für den Zugang zu der zweiten Nut (8) definiert ist,
wobei sich die erste Nut (7) von der ersten Öffnung (7a) über mindestens eine erste Strecke entlang einer geraden Bahn (X) erstreckt,
**dadurch gekennzeichnet, dass** die zweite Nut (8) Folgendes aufweist:
- mindestens eine erste Strecke, die sich von der zweiten Öffnung (8a) quer zu der Bahn (X) der ersten Nut (7) erstreckt,
- mindestens eine zweite Strecke, die sich in Fortsetzung der ersten Strecke in einer Richtung parallel zu oder zusammenfallend mit der Bahn (X) erstreckt.

2. Befestigungselement (5) nach Anspruch 1, wobei die erste und die zweite Seite (6a, 6b) des Hauptkörpers (6) gerade und parallel zu der Bahn (X) sind.

3. Befestigungselement (5) nach Anspruch 1 oder 2, wobei das Befestigungselement (5) mindestens einen Begrenzungsabschnitt (9) umfasst, der sich von dem Hauptkörper (6) aus erstreckt und sich entlang einer Ausdehnungsrichtung (D) erstreckt, die in Bezug auf die Bahn (X) geneigt ist.

4. Befestigungselement (5) nach Anspruch 3, wobei die Ausdehnungsrichtung (D) geneigt ist in Bezug auf die Bahn um einen Innenwinkel zwischen 50° und 70°.

5. Befestigungselement (5) nach einem der Ansprüche 1 bis 4, wobei der Hauptkörper (6) Folgendes aufweist:
- mindestens eine erste und eine zweite Seite (6a, 6b), die einander gegenüberliegen,
- einen Kopfabschnitt (6c), der die erste und die zweite Seite (6a, 6b) verbindet,
wobei die erste Öffnung (7a) der ersten Nut (7) dem Kopfabschnitt (6c) des Hauptkörpers (6) zugewandt ist und wobei die zweite Öffnung (8a) der zweiten Nut (8) der ersten oder der zweiten Seite (6a, 6b) des Hauptkörpers (6) in einem vorbestimmten Abstand von der ersten Öffnung (7a) zugewandt ist.

6. Befestigungselement (5) nach Anspruch 5, wobei die erste Öffnung (7a) durch eine jeweilige erste und zweite Einführstrecke (6c', 6c") begrenzt ist und wobei die zweite Öffnung (8a) durch eine jeweilige erste und zweite Einführstrecke (8c', 8c") begrenzt ist.

7. Befestigungselement (5) nach Anspruch 6, wobei die erste und zweite Einführstrecke (6c', 6c"), welche die erste Öffnung (7a) begrenzen, bogenförmig sind und/oder wobei die erste und zweite Einführstrecke (8c', 8c"), welche die zweite Öffnung (8a) begrenzen, bogenförmig sind.

8. Befestigungselement (5) nach Anspruch 6 oder 7, wobei die erste Öffnung (7a) der ersten Nut (7) den Randbereich des Kopfabschnitts (6c) des Hauptkörpers (6) unterteilt in:
- die erste Einführstrecke (6c'), die zwischen der ersten Seite (6a) und der ersten Öffnung (7a) der ersten Nut (7) eingefügt ist,
- die zweite Einführstrecke (6c"), die zwischen der zweiten Seite (6b) und der ersten Öffnung (7a) der ersten Nut (7) eingefügt ist.

9. Befestigungselement (5) nach Anspruch 8, wobei die erste Einführstrecke (6c') nach außen parallel zu der Ausdehnungsbahn (X) in Bezug auf die zweite Einführstrecke (6c") vorsteht, um eine Stützlippe (20) zu definieren.

10. Mobilgerät zur Pflege von Land, insbesondere von Rasen oder Gärten oder landwirtschaftlichen Flächen, umfassend:
- Bewegungsmittel (2), die dazu konfiguriert sind, eine Bewegung des Mobilgeräts innerhalb eines Arbeitsbereichs zu ermöglichen,
- einen Rahmen (3), umfassend mindestens ein Arbeitswerkzeug, das dazu konfiguriert ist, Pflegearbeiten auf dem Arbeitsbereich durchzuführen,
einen Antriebsgriff (4), der dazu konfiguriert ist, es einem Bediener zu ermöglichen, das Mobilgerät innerhalb des Arbeitsbereichs zu fahren, und
mindestens ein Befestigungselement (5), das zumindest in einem Zwangszustand zwischen dem Antriebsgriff (4) und dem Rahmen (3) eingefügt ist, wobei das Befestigungselement (5) einem der vorstehenden Ansprüche entspricht.

11. Mobilgerät nach dem vorstehenden Anspruch, umfassend mindestens einen Kupplungsabschnitt (11), der von dem Antriebsgriff (4) oder von dem Rahmen (3) getragen wird, wobei der Kupplungsabschnitt (11) mit dem Befestigungselement (5) des Mobilgeräts (1) lösbar in Eingriff gebracht werden kann, und zwar mindestens zwischen:
- dem Zwangszustand, in dem das Befestigungselement (5) mit dem Kupplungsabschnitt (11) in Eingriff steht,
einem Freigabezustand, in dem das Befestigungselement (5) von dem Kupplungsabschnitt (11) gelöst ist.

12. Mobilgerät nach dem vorstehenden Anspruch, wobei in dem Freigabezustand das Befestigungselement (5) von dem Rahmen (3) getragen wird, während der Kupplungsabschnitt (11) von dem Antriebsgriff (4) getragen wird.

13. Mobilgerät nach Anspruch 11 oder 12, wobei der Kupplungsabschnitt (11) mindestens einen ersten und einen zweiten Verriegelungsstift (12, 13) aufweist, die jeweils dazu konfiguriert sind, in die zweite Nut (8) und die erste Nut (7) eingeführt zu werden.

14. Mobilgerät nach dem vorstehenden Anspruch, wobei der Kupplungsabschnitt (11) einen länglichen Körper aufweist, der sich entlang einer vorbestimmten Ausdehnungsrichtung erstreckt, wobei der erste und der zweite Verriegelungsstift entlang der Ausdehnungsrichtung ausgerichtet sind; und
wobei der erste und der zweite Verriegelungsstift (12, 13) jeweils eine Strecke (12a, 13a) aufweisen, die quer in Bezug auf den länglichen Körper des Kupplungsabschnitts (11) herausragt, wobei jede der Strecken (12a, 13a) jeweils in die erste und die zweite Nut (7, 8) eingreifen kann.

15. Mobilgerät nach Anspruch 13 oder 14, wobei:
i) bei Verwendung des Mobilgeräts die erste Seite (6a) des Hauptkörpers (6) dem zu pflegenden Land zugewandt ist und wobei die zweite Seite (6b) von dem Land abgewandt ist, und/oder
ii) der erste Verriegelungsstift (12) einen Anschlusskörper (16) trägt, der sich quer zu der Strecke (12a) des ersten Verriegelungsstifts (12) erstreckt, wobei der Anschlusskörper (16) dazu konfiguriert ist, in dem Zwangszustand des Befestigungselements (5), in dem der erste Verriegelungsstift (12) in die zweite Nut (8) eingeführt ist, das Herausziehen des ersten Verriegelungsstifts (12) aus der zweiten Nut (8) entlang einer Richtung parallel zu dem Verriegelungsstift selbst zu verhindern und somit das Herausziehen des ersten Verriegelungsstifts (12) aus der zweiten Nut (8) nur durch die zweite Zugangsöffnung (8a) zu erlauben und/oder
iii) der zweite Verriegelungsstift (13) mindestens einen Gewindeabschnitt aufweist, und wobei das Mobilgerät (1) mindestens einen Verriegelungsknopf (17) umfasst, der dazu konfiguriert ist, mit dem Gewindeabschnitt des zweiten Verriegelungsstifts (13) in Eingriff zu kommen und den Kupplungsabschnitt (11) an das Befestigungselement (5) zu zwingen, und/oder
iv) das Gerät Folgendes umfasst:
- eine Vielzahl von Kupplungsabschnitten (11), die jeweils von unterschiedlichen Enden des Antriebsgriffs (4) getragen werden,
eine Vielzahl von Befestigungselementen (5), die von dem Rahmen (3) getragen werden und jeweils dazu konfiguriert sind, mit jeweiligen von dem Antriebsgriff (4) getragenen Kupplungsabschnitten (11) in Eingriff zu kommen.

## Revendications

1. Élément de fixation (5) configuré pour être installé dans un dispositif mobile pour la maintenance des terres, en particulier des gazons ou des jardins ou des terres agricoles,
ledit élément de fixation (5) comprenant :
- au moins un corps principal (6),
- au moins une première rainure (7) s'étendant d'une zone intérieure du corps principal (6) à une zone périphérique du corps principal (6) lui-même où une première ouverture (7a) d'accès à la première rainure (7) est définie,
- au moins une seconde rainure (8) distincte et espacée de la première rainure (7), ladite seconde rainure (8) s'étendant de la zone intérieure du corps principal (6) vers la zone périphérique du corps principal (6) lui-même où une seconde ouverture (8a) d'accès à la seconde rainure (8) est définie,
dans lequel la première rainure (7) s'étend à partir de la première ouverture (7a) sur au moins un premier tronçon, le long d'une trajectoire droite (X),
**caractérisé en ce que** la seconde rainure (8) comprend :
- au moins un premier tronçon s'étendant à partir de la seconde ouverture (8a), transversalement à la trajectoire (X) de la première rainure (7),
- au moins un second tronçon s'étendant dans la continuité du premier tronçon, le long d'une direction parallèle ou coïncidant avec la trajectoire (X).

2. Élément de fixation (5) selon la revendication 1, dans lequel le premier et le second côté (6a, 6b) du corps principal (6) sont droits et parallèles à la trajectoire (X).

3. Élément de fixation (5) selon la revendication 1 ou la revendication 2, dans lequel l'élément de fixation (5) comprend au moins une partie de contrainte (9) s'étendant à partir du corps principal (6) et s'étendant le long d'une direction d'extension (D) qui est inclinée par rapport à la trajectoire (X).

4. Élément de fixation (5) selon la revendication 3, dans lequel la direction d'extension (D) est inclinée par rapport à la trajectoire d'un angle interne compris entre 50° et 70°.

5. Élément de fixation (5) selon l'une quelconque des revendications 1 à 4, dans lequel le corps principal (6) comprend :
- au moins un premier et un second côtés (6a, 6b) opposés l'un à l'autre,
- une partie tête (6c) reliant le premier et le second côté (6a, 6b),
dans lequel la première ouverture (7a) de la première rainure (7) fait face à la partie tête (6c) du corps principal (6) et dans lequel la seconde ouverture (8a) de la seconde rainure (8) fait face au premier ou au second côté (6a, 6b) du corps principal (6), à une distance prédéterminée de la première ouverture (7a).

6. Élément de fixation (5) selon la revendication 5, dans lequel la première ouverture (7a) est délimitée par un premier et un second tronçon d'entrée respectifs (6c', 6c") et dans lequel la seconde ouverture (8a) est délimitée par un premier et un second tronçon d'entrée respectifs (8c', 8c").

7. Élément de fixation (5) selon la revendication 6, dans lequel les premier et second tronçons d'entrée (6c', 6c") délimitant la première ouverture (7a) sont arqués et/ou dans lequel les premier et second tronçons d'entrée (8c', 8c"), délimitant la seconde ouverture (8a) sont arqués.

8. Élément de fixation (5) selon la revendication 6 ou la revendication 7, dans lequel la première ouverture (7a) de la première rainure (7) divise la zone périphérique de la partie tête (6c) du corps principal (6) en :
- ledit premier tronçon d'entrée (6c'), qui est interposé entre le premier côté (6a) et la première ouverture (7a) de la première rainure (7),
- ledit second tronçon d'entrée (6c"), qui est interposé entre le second côté (6b) et la première ouverture (7a) de la première rainure (7).

9. Élément de fixation (5) selon la revendication 8, dans lequel le premier tronçon d'entrée (6c') fait saillie extérieurement, parallèlement à ladite trajectoire d'extension (X), par rapport au second tronçon d'entrée (6c") pour définir une lèvre de support (20).

10. Dispositif mobile pour la maintenance de terres, en particulier de gazons ou de jardins ou de terres agricoles, comprenant :
- des moyens de déplacement (2) configurés pour permettre un déplacement du dispositif mobile dans une zone de travail,
- un cadre (3) comprenant au moins un outil de travail configuré pour effectuer des opérations de maintenance sur la zone de travail,
- une poignée d'entraînement (4) configurée pour permettre à un opérateur de conduire ledit dispositif mobile dans la zone de travail et
- au moins un élément de fixation (5) interposé, au moins dans un état de contrainte, entre la poignée d'entraînement (4) et le cadre (3), ledit élément de fixation (5) étant selon l'une quelconque des revendications précédentes.

11. Dispositif mobile selon la revendication précédente, comprenant au moins une partie de couplage (11) portée par la poignée d'entraînement (4) ou par le cadre (3), ladite partie de couplage (11) pouvant être engagée de manière amovible sur l'élément de fixation (5) du dispositif mobile (1), au moins entre :
- la condition de contrainte dans laquelle l'élément de fixation (5) est engagé sur la partie de couplage (11),
- une condition de libération dans laquelle l'élément de fixation (5) est dégagé de la partie de couplage (11).

12. Dispositif mobile selon la revendication précédente, dans lequel, dans l'état de libération, l'élément de fixation (5) est porté par le cadre (3), tandis que la partie de couplage (11) est portée par la poignée d'entraînement (4).

13. Dispositif mobile selon la revendication 11 ou la revendication 12, dans lequel la partie de couplage (11) a au moins une première et une seconde goupilles de verrouillage (12, 13) respectivement configurées pour s'insérer à l'intérieur de la seconde rainure (8) et de la première rainure (7).

14. Dispositif mobile selon la revendication précédente, dans lequel la partie de couplage (11) a un corps allongé s'étendant le long d'une direction d'extension prédéterminée, dans lequel la première et la seconde goupille de verrouillage sont alignées le long de ladite direction d'extension ; et
dans lequel la première et la seconde goupille de verrouillage (12, 13) ont une extension respective (12a, 13a) émergeant transversalement par rapport au corps allongé de la partie de couplage (11), chacune desdites extensions (12a, 13a) pouvant être respectivement engagée dans la première et la seconde rainure (7, 8).

15. Dispositif mobile selon la revendication 13 ou la revendication 14, dans lequel :
i) lors de l'utilisation du dispositif mobile, le premier côté (6a) du corps principal (6) fait face à la terre à entretenir, et dans lequel le second côté (6b) est tourné à l'opposé de la terre, et/ou
ii) la première goupille de verrouillage (12) porte un corps de borne (16) s'étendant transversalement au tronçon (12a) de la première goupille de verrouillage (12), ledit corps de borne (16) étant configuré, dans l'état de contrainte de l'élément de fixation (5) dans lequel la première goupille de verrouillage (12) est insérée dans la seconde rainure (8), pour empêcher l'extraction de la première goupille de verrouillage (12) de la seconde rainure (8) le long d'une direction parallèle à la goupille de verrouillage elle-même et permettant ainsi l'extraction de la première goupille de verrouillage (12) de la seconde rainure (8) uniquement à travers la seconde ouverture d'accès (8a) et/ou
iii) la seconde goupille de verrouillage (13) a au moins une partie filetée, et dans lequel le dispositif mobile (1) comprend au moins un bouton de verrouillage (17) configuré pour engager la partie filetée de la seconde goupille de verrouillage (13) et pour contraindre la partie de couplage (11) à l'élément de fixation (5) et/ou
iv) le dispositif comprend :
- une pluralité de parties de couplage (11) respectivement portées par des extrémités distinctes de la poignée d'entraînement (4),
- une pluralité d'éléments de fixation (5) portés par le cadre (3) et respectivement configurés pour engager des parties de couplage respectives (11) portées par la poignée d'entraînement (4).
